# EUROPÄISCHE PATENTANMELDUNG

(11) **EP 1 995 165 A2**
(43) Veröffentlichungstag der Anmeldung: **26.11.2008**
(21) Anmeldenummer: 08005401.8
(22) Anmeldetag: 22.03.2008
(51) Int. Cl.: B62M 1/12

(54) **Fahrrad mit Arm- und Beinantrieb**

(30) Priorität: 22.03.2007 DE 102007014491
(71) Anmelder: Kraiß, Martin, 89081 Ulm (DE)
(72) Erfinder: Kraiß, Martin, 89081 Ulm (DE)

(57) **Zusammenfassung**

Bei der Erfindung handelt es sich um ein Fahrrad mit Arm und Beinantrieb.

Bekannte Fahrräder mit Arm- und Beinantrieb werden über die Arme gelenkt und angetrieben. Der Nachteil dieser Ausführung ist, dass der Antrieb über die Arme die Lenkbewegung stört.

Die Erfindung löst das geschilderte Problem, indem der Fahrradfahrer das

Fahrrad über Armhebel und Trittbretter antreibt und gleichzeitig das Fahrrad lenkt, indem er über eine Hüftauflage die Gabel des Fahrrades schwenkt.

Die Erfindung ermöglicht es dem Fahrradfahrer das Fahrrad über die

Armhebel und Trittbretter anzutreiben und dabei gleichzeitig zu lenken.

## Beschreibung

Bei der Erfindung handelt es sich um ein Fahrrad mit Arm- und Beinantrieb. Es handelt sich nicht um ein Fahrrad mit Arm- und Beinantrieb, wie das Europäische Patent EP06012476, bei dem die Arme eine drehende Handkurbel und die Beine eine drehende Tretkurbel antreiben. Bei einer drehenden Handkurbel rotieren die Handgriffe beim Armantrieb um die Lagerachse der Handkurbeln, auf der die Handgriffe drehbar gelagert sind.

Ein Fahrrad ist ein Fahrzeug, das vom Fahrradfahrer mit Muskelkraft angetrieben wird. In der Regel ist es einspurig und besitzt zwei Räder. Es gibt aber auch dreirädrige, zweispurige Fahrräder, oder zweirädrige Fahrräder mit zusätzlichen Stützrädern. Fahrräder können mit Armantrieb oder mit Beinantrieb oder mit einem Arm- und einem Beinantrieb ausgestattet sein.
Bekannte Fahrräder mit Arm- und Beinantrieb werden über die Hände gelenkt und angetrieben. Das US-Patent 5,775,708 offenbart ein solches Fahrrad. Der Nachteil dieser bekannten Fahrräder ist, dass die Hände des Fahrradfahrers gleichzeitig das Fahrrad antreiben und lenken müssen. Durch die Antriebskraft die die Arme über die Hände auf die Armhebel ausüben, lässt es sich nicht vermeiden das die Lenkbewegung gestört wird. Grund dafür ist die Bewegung, die den Armhebel bewegt. Da der lenkende Handgriff nicht fest mit dem Armhebel verbunden ist, wird sich der Handgriff bei jeder antreibenden Armbewegung mitbewegen und somit eine mehr oder minder starke Lenkbewegung bewirken. Diese Neigung zur Lenkbewegung während des Antriebes durch die Arme bewirkt, dass der Fahrradfahrer bei Geradeausfahrt, während seines Antreiben des Fahrrades über seine Arme, versuchen muss dabei gleichzeitig den Handgriff nicht zu schwenken. Dies ist nahezu unmöglich. Selbst wenn es dem Fahrradfahrer gelingt den Handgriff nahezu unbewegt zu halten, so erfordert dies doch höchste Konzentration und große Anstrengung. Somit wird der Fahrradfahrer mit seinen Händen nicht die Volle mögliche Antriebskraft auf die Armhebel ausüben, da dadurch sofort der lenkende Handgriff bewegt würde. Der Nachteil ist also, dass die Hände die Antriebskraft der Arme übertragen müssen und dabei gleichzeitig das Fahrrad lenken müssen. Außerdem ist die Lenkkraft, die durch eine Schwenkbewegung des lenkenden Handgriffes erzeugt wird, zu gering. Grund dafür ist der geringe Hebelarm des Handgriffes und die geringe Kraft die die Hand für diese Schwenkbewegung des Handgriffes aufbringen kann. Ein sicheres Lenken erfordert eine bedeutend höhere Lenkkraft. Insbesondere, da ein großer Teil der Lenkkraft bereits durch Reibung der Bowdenzüge verloren geht. Diese Bowdenzüge übertragen die Lenkkraft von den Handgriffen auf die lenkende Fahrradgabel.

Die Aufgabe der Erfindung ist es, dass der Fahrradfahrer seine Antriebskraft optimal auf das Fahrrad übertragen kann. Weiterhin ist es die Aufgabe der Erfindung die Lenkung des Fahrrades vor dem Einfluss von Antriebskräften zu bewahren. Der Fahrradfahrer soll das Fahrrad mit seiner ganzen Kraft antreiben können und dabei das Fahrrad sicher und präzise lenken können.

Die Erfindung löst das geschilderte Aufgabe, indem es die Antriebsbewegung von der Lenkbewegung trennt. Der Fahrradfahrers treibt das Fahrrad durch seine Arme an. Die Lenkbewegung erfolgt jedoch durch die Bewegung der Hüfte des Fahrradfahrers. Somit ist die Aufgabe gelöst, indem die Erfindung die Antriebsbewegung von der Lenkbewegung trennt.

Die Erfindung ermöglicht es somit dem Fahrradfahrer das Fahrrad mit seinem vollen Körpereinsatz anzutreiben, ohne dabei die Lenkung zu beeinflussen. Der Fahrradfahrer kann zum Antrieb des Fahrrades seine ganze Beinkraft und die ganze Kraft seiner Arme und seines Oberkörpers einsetzen und dabei das Fahrrad sicher und präzise lenken.

Ein weiterer Vorteil der Erfindung ist, dass der Lenkerarm 5 der die Lenkbewegung überträgt sehr lange ist. Somit kann der Fahrradfahrer über eine Hüftbewegung mit relativ wenig Kraft ein relativ großes Lenkmoment erzeugen. Stöße und Schläge die auf das Vorderrad wirken kann der Fahrradfahrer spielend leicht mit seiner Hüfte entgegenhalten. Außerdem ermöglicht der lange Lenkerarm 5 gleichzeitig einen relativ großen Lenkweg, also Lenkhub, der dem Fahrradfahrer eine fein dosiertes und somit sehr exaktes Lenken ermöglicht.

Das bekannte Fahrrad des Europäischen Patents EP06012476 offenbart bereits eine Fahrradlenkung, bei der ein Lenkerarm 5 drehbar um eine Lenkkopflagerachse 2.3 gelagert ist. Der Sattel 3 ist hierbei fest mit dem Lenkerarm 5 verbunden. Im Gegensatz zur neuen Erfindung überträgt im Europäischen Patent EP06012476 der Fahrradfahrer seine Armkraft über eine Kurbelbewegung auf das Fahrrad. Der Nachteil des Europäischen Patents EP06012476 ist, dass der Fahrradfahrer beim Fahren auf dem Sattel 3 sitzt und somit der Lenkerarm 5 und das Gabellagerrohr 1.3 einer starken Biegebeanspruchung unterliegen. Deshalb müssen der Lenkerarm 5, das Gabellagerrohr 1.3 und das Lenkkopflager, beim Patent EP06012476 sehr biegesteif ausgelegt sein und haben ein entsprechend hohes Gewicht. Diesen genannten Nachteil des bekannten Europäischen Patents EP06012476 löst die neue Erfindung, indem die Antriebsweise des Fahrradfahrers eine andere ist. In der neuen Erfindung entspricht der Bewegungsablauf beim Antrieben des Fahrrades dem Bewegungsablauf auf Crosstrainern in Fitnessstudios. Dadurch fährt der Fahrradfahrer stehend und überträgt somit sein Gewicht nicht auf die Hüftauflage 3.3,3.4, da der Fahrradfahrer nicht auf dieser Hüftauflage 3.3,3.4 drauf sitzt, sondern sich nur in diese horizontal abstützt und damit lenkt. Bei den erfindungsgemäßen Varianten der neuen Erfindung, welche über einen einem Sattel 3.2 oder einem Sattelrohr verfügen, ist der Lenkerarm 5 zum Gabellagerrohr 1.3 schwenkbar gelagert. Dies ist durch die stehende Fahrweise möglich. Dadurch benötigt der Fahrradfahrer den Sattel 3.2 und das Sattelrohr nicht zum Draufsitzen, sondern nur zum Lenken des Fahrrades. Somit kann der Lenkerarm 5 zum Gabellagerrohr 1.3 schwenkbar gelagert sein. Dies hat den Vorteil, dass die Gewichtskraft des Fahrradfahrers nicht auf das Gabelschaftrohr 1.3 übertragen wird und während der Tretbewegung des Fahrradfahrers der Sattel 3-2 oder das Sattelrohr der Hüftewegung frei folgen kann.

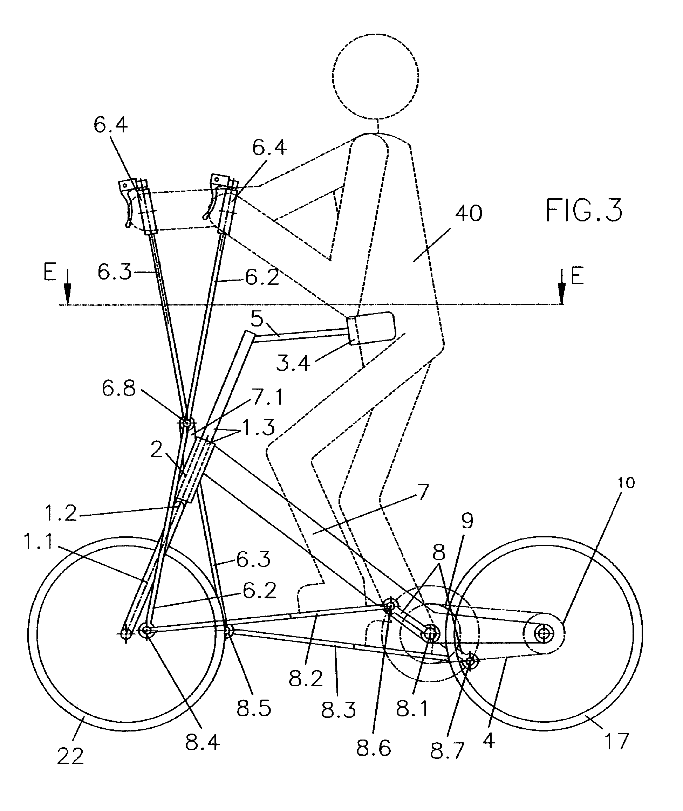

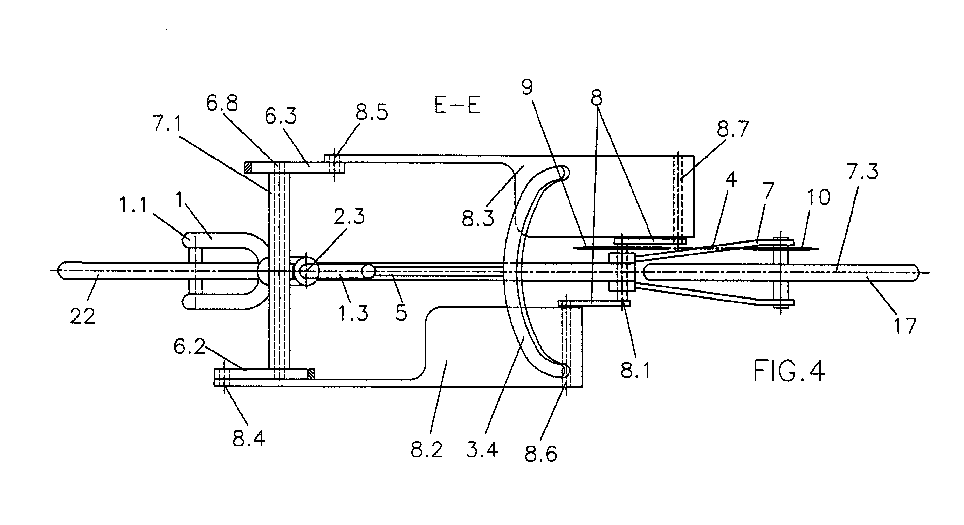

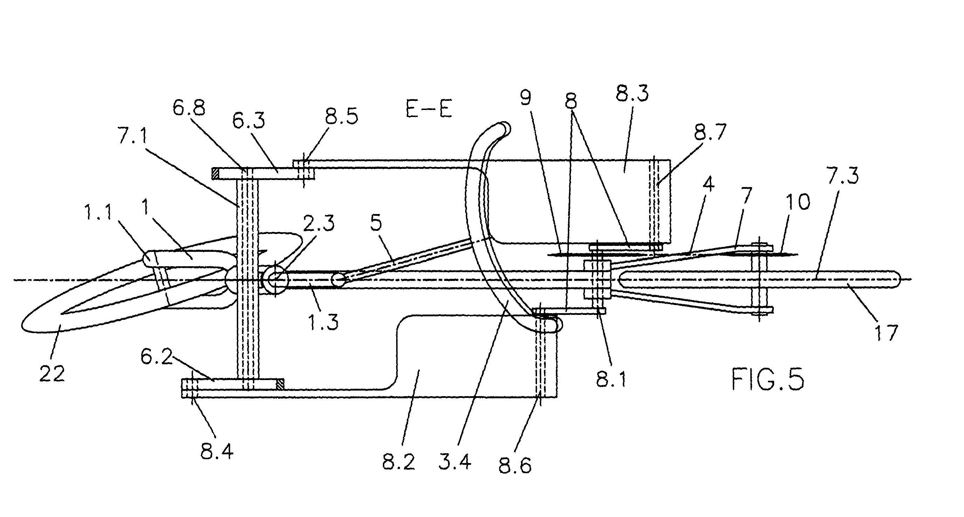

In der erfindungsgemäßen Variante A1 der Erfindung treibt der Fahrradfahrer mit seinen Beinen die Tretkurbeln 8 des Fahrrades an. Die Gabel 1 ist im Lenkkopflager 2 des Fahrradrahmens 7 drehbar gelagert (FIG.3). In ihr ist das Vorderrad 22 drehbar gelagert. Die Gabel 1 besteht aus den Gabelrohren 1.1, der Gabelbrücke 1.2 und dem Gabelschaftrohr 1.3. Die Tretkurbeln 8 sind mit der Achse 8.1 verschraubt. Diese Achse 8.1 ist über das Tretlager drehbar im Fahrradrahmen 7 gelagert.
Zum Antrieb des Fahrrades bewegt der Fahrer mit seinen Füßen die Tretkurbeln 8. Auf der rechten Seite des Fahrradrahmens 7 verläuft die Antriebskette 4 (FIG.4). Sie treibt über das Antriebskettenrad 9, welches fest mit der Tretkurbel 8 verbunden ist, und über das Antriebsritzel 10 das Hinterrad 17 an. Der Fahrradfahrer 40 treibt das Fahrrad über seine Beine und zusätzlich über seine Arme an. Beim Antrieb entspricht der Bewegungsablauf des Fahrradfahrers dem Bewegungsablauf auf Crosstrainern in Fitnessstudios. Zum Antrieb hält der Fahrradfahrer mit seinen Händen die Handgriffe 6.4 fest. Durch Armbewegungen bewegt der Fahrradfahrer 40 die Armhebel 6.2 und 6.3 vor und zurück. Die Armhebel 6.2 und 6.3 sind über die Achse 6.8 schwenkbar im Rahmenstück 7.1 gelagert. Das Rahmenstück 7.1 ist fest mit dem Fahrradrahmen 7 verbunden. Mit seinen Beinen tritt der Fahrradfahrer 40 auf die Trittbretter 8.2 und 8.3. Das eine Ende des Trittbrettes 8.2 ist über die Achse 8.6 drehbar in der Tretkurbel 8 gelagert. Das andere Ende des Trittbrettes 8.2 ist über die Achse 8.4 drehbar im Armhebel 6.2 gelagert. Das eine Ende des Trittbrettes 8.3 ist über die Achse 8.7 drehbar in der Tretkurbel 8 gelagert. Das andere Ende des Trittbrettes 8.3 ist über die Achse 8.5 schwenkbar im Armhebel 6.3 gelagert.
Der Fahrradfahrer lenkt die Gabel 1 des Fahrrades über die Hüftauflage 3-4 des Fahrrades. Er lenkt, indem er seine Hüfte in die Hüftauflage 3.4 drückt und über drehen und schwenken seiner Hüfte die Hüftauflage 3.4 bewegt. In der Variante A1 ist die Gabel 1 im Lenkkopflager 2 des Fahrradrahmens 7 drehbar gelagert (F1G.3). Die Hüftauflage 3.4 ist fest im Lenkerarm 5 geklemmt, welcher fest mit dem Gabelschaftrohr 1.3 verbunden ist.
Schwenkt der Fahrradfahrer die Hüftauflage 3.4 nach rechts, dann schwenkt auch der Lenkerarm 5 nach rechts und schwenkt dadurch die Gabel 1 gegen den Uhrzeigersinn, um die Lenkkopflagerachse 2.3 und somit lenkt die Gabel 1 das Fahrrad nach links. Schwenkt der Fahrradfahrer die Hüftauflage 3.4 nach links, dann schwenkt auch der Lenkerarm 5 nach links und die Gabel 1 lenkt das Fahrrad nach rechts. FIG.4 und 5 zeigen die Draufsicht des Fahrrades. FIG.4 zeigt die Stellung der Gabel 1, des Lenkerarms 5 und der Hüftauflage 3.4 beim Geradeauslauf. FIG.5 zeigt die Stellung der Gabel 1, des Lenkerarms 5 und der Hüftauflage 3.4 bei einer Lenkbewegung des Vorderrades 22 nach links. Die Seitenangaben "links" und "rechts" bedeuten in allen geschilderten Varianten, die Seiten aus der Sicht des Fahrradfahrers der in Fahrtrichtung auf dem Fahrrad sitzt.

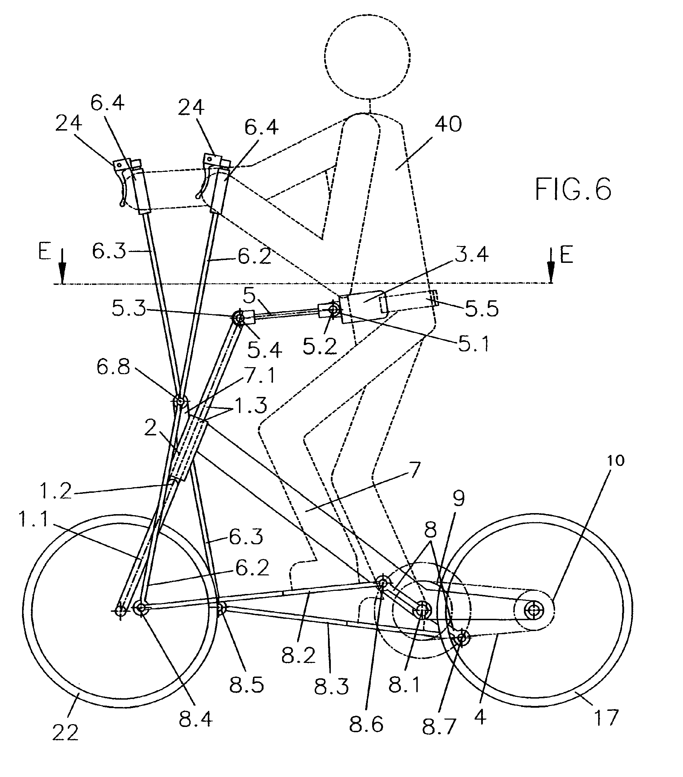

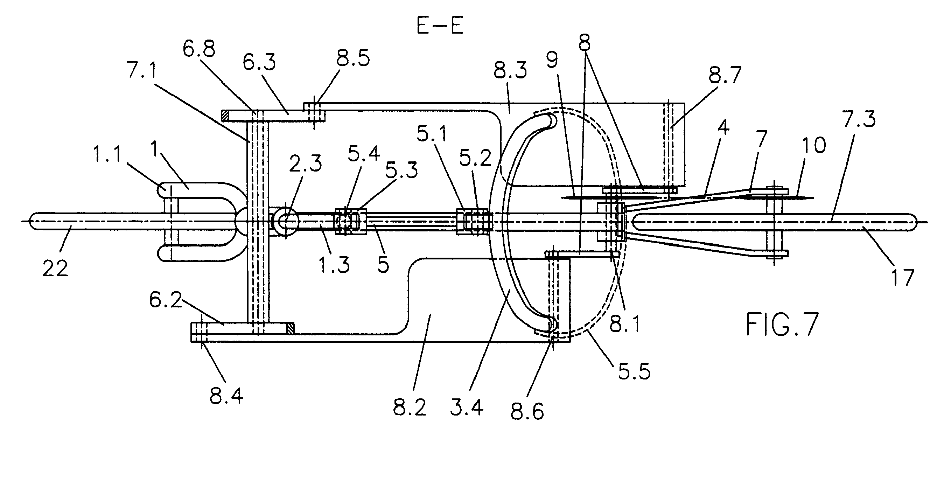

Die erfindungsgemäße Variante A2 entspricht der Variante A1.
Allerdings ist in Variante A2 der Lenkerarm 5 fest mit einem Gabelgelenk 5.3 verbunden (FIG.6,7). Über dieses Gabelgelenk 5.3, ist der Lenkerarm 5, um die Achse 5.4 des Gabelgelenks 5.3, schwenkbar im Gabelschaftrohr 1.3 gelagert. Außerdem ist der Lenkerarm 5 fest mit einem Gabelgelenk 5.1 verbunden. Über dieses Gabelgelenk 5.1, ist der Lenkerarm 5, um die Achse 5.2 des Gabelgelenks 5.1, schwenkbar in der Hüftauflage 3.4 gelagert. Somit kann sich die Hüftauflage 3.4 der Hüftebewegung in vertikaler Richtung anpassen. Diese Hüftebewegung, die es auszugleichen gilt, tritt während der Tretbewegung des Fahrradfahrers auf. Bei dieser Tretbewegung bewegt sich der Fahrradfahrer und mit ihm seine Hüfte vertikal auf und ab. Der Gürtel 5.5 (gestrichelt dargestellt) gilt für Variante C1.

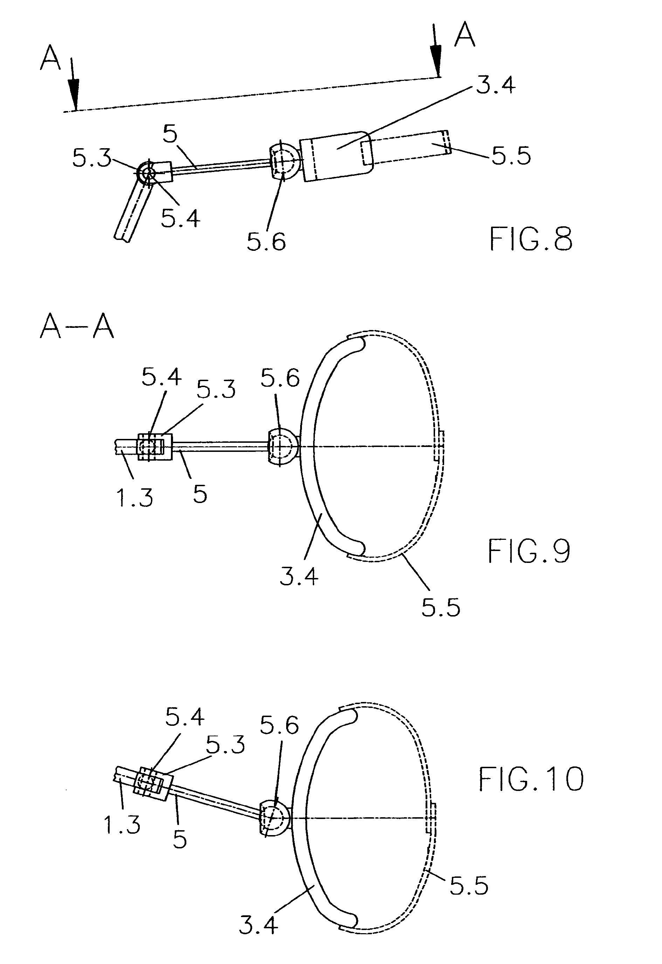

Die erfindungsgemäße Variante A3 entspricht der Variante A2. Allerdings ist in dieser Variante A3 das Gabelgelenk, dass den Lenker 5 mit der Hüftauflage 3.4 verbindet, ein Kugelgelenk 5.6, das in alle Richtungen schwenkbar ist FIG.8,9. Somit kann sich die Hüftauflage 3.4 noch besser der Hüftebewegung anpassen. FIG. 8 zeigt die gleiche Ansicht wie FIG.6, jedoch nur einen Ausschnitt ohne den Rest des Fahrrades und ohne den Fahrradfahrer. FIG.10 zeigt die gleiche Ansicht wie der Schnitt A-A in FIG.9, jedoch zeigt FIG.10 die Stellung des Lenkerarms 5 und der Hüftauflage 3.4 bei einer Lenkbewegung des Vorderrades 22 nach rechts. Der Gürtel 5.5 (gestrichelt dargestellt) gilt für Variante C1.

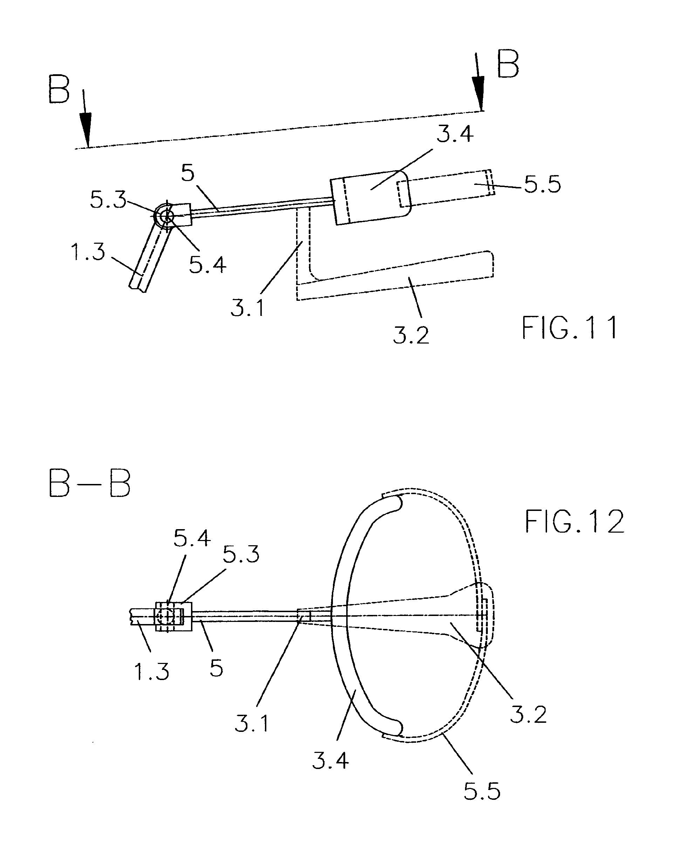

Die erfindungsgemäße Variante A4 entspricht der Variante A2. Allerdings ist in dieser Variante A4 das Gabelgelenk 5.1, das den Lenkerarm 5 mit der Hüftauflage 3.4 verbindet, nicht vorhanden, sondern die Hüftauflage 3.4 ist fest mit dem Lenkerarm 5 verbunden (FIG.11,12). Der Gürtel 5.5 (gestrichelt dargestellt) gilt für Variante C1. Falls die Variante A4 mit Gürtel 5.5 (siehe Variante C1) versehen ist, dann ist der Gürtel 5.5 vorzugsweise nur locker gegurtet, oder er besteht aus einem relativ flexiblen Material, wie Stretchgewebe, oder Gummi. Der Grund dafür ist, dass sich bei einer vertikalen Bewegung der Hüfte des Fahrradfahrers relativ zum Fahrrad, der Winkel der Hüftanlagefläche der Hüftauflage 3.4 zur entsprechenden Anlagefläche der Hüfte des Fahrradfahrers ändert und nicht, wie in den Varianten A2 und A3, die Hüftanlagefläche der Hüftauflage 3.4, durch das Gelenk 5.1 bzw.5.6, immer gleich an der Hüfte anlegen kann. FIG. 11 zeigt die gleiche Ansicht wie FIG.6, jedoch nur einen Ausschnitt ohne den Rest des Fahrrades und ohne den Fahrradfahrer. Der Sattel 3.2 und der Arm 3.1 (gestrichelt dargestellt) gilt für Variante A10.

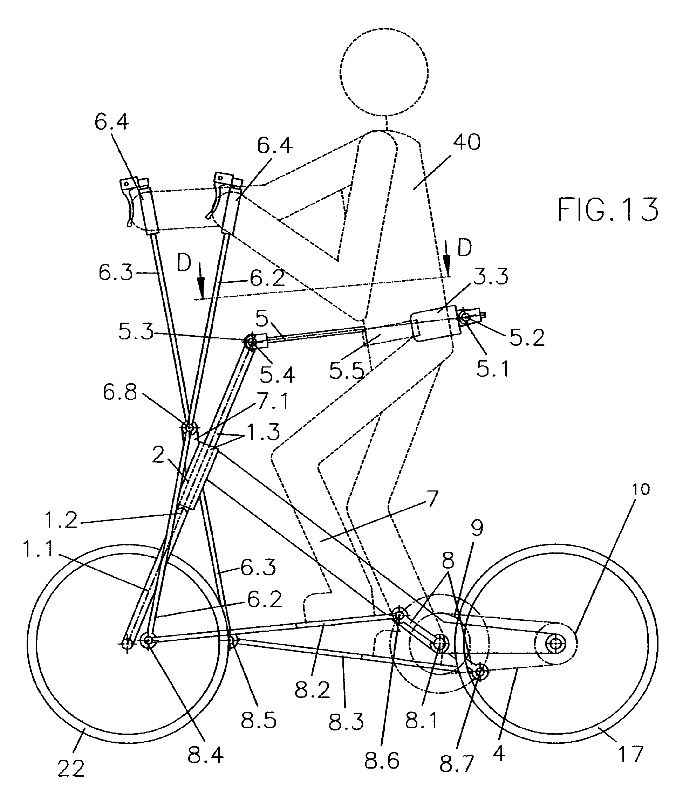

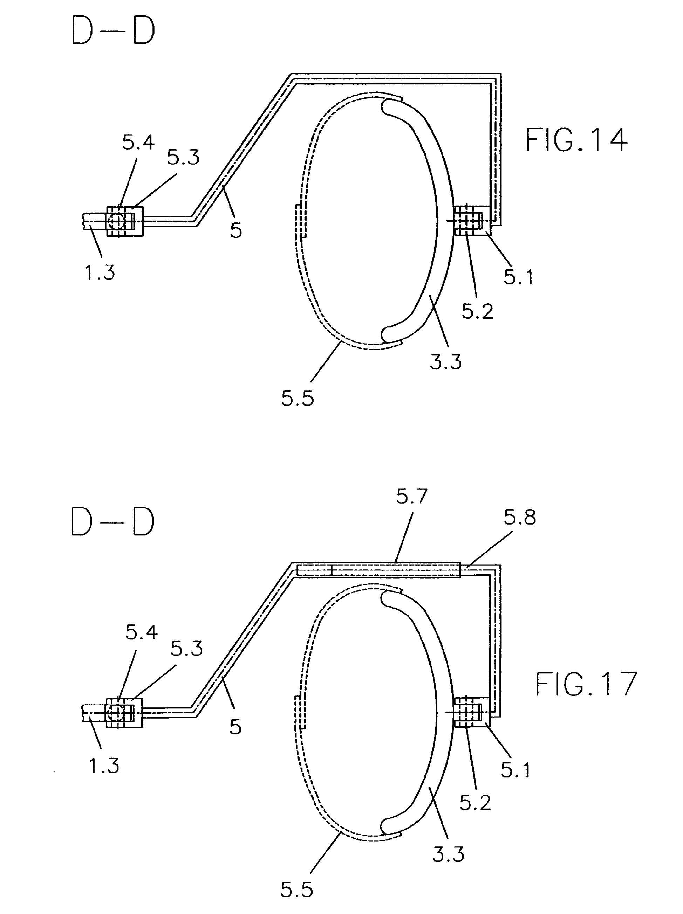

Die erfindungsgemäße Variante A5 entspricht der Variante A2. Allerdings verläuft in dieser Variante 5 der Lenkerarm 5 um die Hüfte herum und die Hüftauflage 3.4 wird durch eine Hüftauflage 3.3 ersetzt. Diese Hüftauflage 3.3 umklammert die Hüfte von hinten. Der Fahrradfahrer bewegt die Hüftauflage 3.3 mit dem hinteren Teil seiner Hüfte oder seinem Gesäß. Wie in Variante A2 besitzt die Variante A5 ein Gabelgelenk 5.1 und ein Gabelgelenk 5.3. Über das Gabelgelenk 5.1 ist die Hüftauflage 3.3, um die Achse 5.2 des Gabelgelenks 5.1, schwenkbar zum Lenkerarm 5 gelagert (FIG.13,14). FIG. 14 zeigt den Schnitt D-D der FIG.13, jedoch nur einen Ausschnitt ohne den Rest des Fahrrades und ohne den Fahrradfahrer. Der Gürtel 5.5 (gestrichelt dargestellt) gilt für Variante C1.
Der Vorteil der Variante A5 ist, dass sich der Fahrradfahrer entspannt nach hinten in die Hüftauflage 3.3 lehnen kann. Außerdem kann er, während Streckbewegungen seiner Arme während seines Armantriebes, die aufgebrachte Armkraft mittels seiner Hüfte in der Hüftauflage 3.3 abstützen. Weiterhin kann sich der Körper des Fahrradfahrers, bei einem Frontalaufprall des Fahrrades, mit einer Vorwärtsbewegung von der Hüftauflage 3.3 und somit vom Fahrrad lösen.

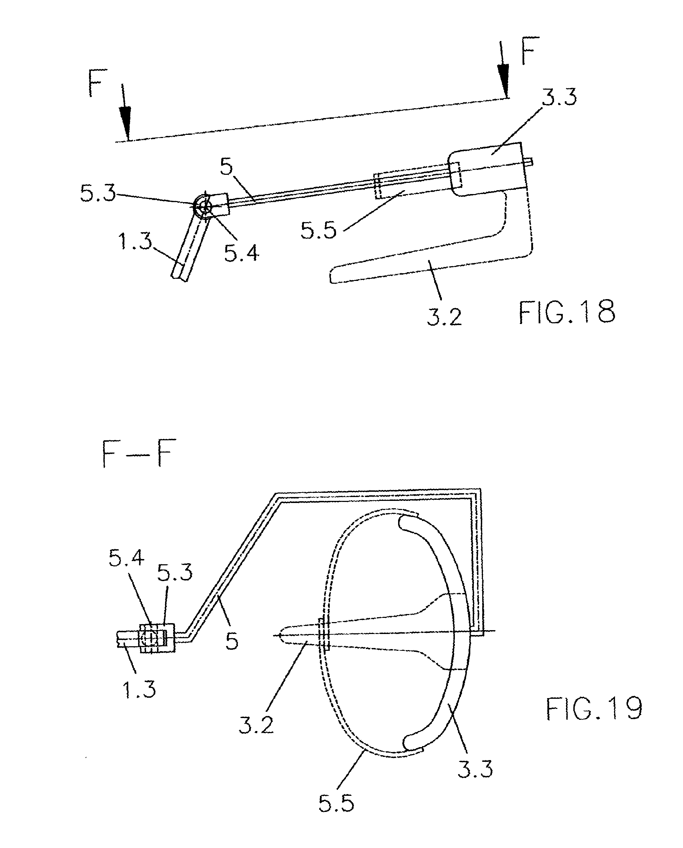

Die erfindungsgemäße Variante A6 entspricht der Variante A5. Allerdings ist in Variante A6 die Hüftauflage 3.3, nicht wie in Variante A5, über ein Gabelgelenk 5.1 schwenkbar zum Lenkerarm 5 gelagert, sondern die Hüftauflage 3.3 ist fest mit dem Lenkerarm 5 verbunden (FIG.18,19).
FIG.18 zeigt die selbe Ansicht wie FIG.13, jedoch nur einen Ausschnitt ohne den Rest des Fahrrades und ohne den Fahrradfahrer. Der Gürtel 5.5 (gestrichelt dargestellt) gilt für Variante C1. Der Sattel 3.2 (gestrichelt dargestellt) gilt für Variante A8.

Die erfindungsgemäße Variante A7 entspricht der Variante A5. Allerdings ist in Variante A7 die Verbindung der Hüftauflage 3.3 mit Lenkerarm 5, nicht wie in Variante A5, über ein Gabelgelenk 5.1 verbunden. Stattdessen ist in der Variante A7 anstelle des Gabelgelenks 5.1 die Hüftauflage 3.3 mit dem Lenkerarm 5 über ein Kugelgelenk 5.8 (ohne Abbildung) verbunden. Ein solches Kugelgelenk 5.6 ist in Variante A3 dargestellt. Dieses Kugelgelenk 5.6 ist in alle Richtungen schwenkbar. Somit kann sich in der Variante A7 die Hüftauflage 3.3 noch besser der Hüftebewegung anpassen.

Die erfindungsgemäße Variante A8 entspricht den vorherigen Varianten die eine Hüftauflage 3.3 haben. Allerdings besitzt die Hüftauflage 3.3 in der Variante A8 einen zusätzlichen Sattel 3.2 (in FIG.18,19 gestrichelt dargestellt), der fest mit der Hüftauflage 3.3 verbunden ist. Der Sattel 3.2 dient dem Lenken und nicht dem Sitzen, deshalb ist er sehr schmal und entspricht eher einer verlängerten Sattelspitze. Durch seine schmale Form hindert der Sattel 3.2 den Fahrradfahrer weniger beim Treten, da er während des Tretens weniger an den Oberschenkeln reibt. Indem sich der Sattel 3.2 zwischen den Oberschenkeln des Fahrradfahrers befindet, verleiht er der Hüftauflage 3.3 zusätzlichen Seitenhalt. Der Gürtel 5.5 (gestrichelt dargestellt) gilt für Variante C1.

Die erfindungsgemäße Variante A9 entspricht der Variante A8. Allerdings wird in der Variante 9 auf die Hüftauflage 3.3 verzichtet (ohne Abbildung). Der Lenkerarm 5 ist in dieser Variante direkt mit dem Sattel 3.2 fest verbunden und der Lenkeram 5 oder der Sattel 3.2 ist über einen Gürtel an die Hüfte des Fahrradfahrers gegurtet, damit der Sattel 3.2 ständig in Kontakt zum Gesäß des Fahrradfahrers gehalten wird und nicht nach unten wegklappt. Alternativ zum Gürtel verfügt der Lenkerarm 5 über eine Feder, der den Lenkerarm 5 nach oben drückt. Als "nach oben" bedeutet in der FIG.18, um die Achse 5.4 gegen den Uhrzeigersinn. Durch die Federkraft wird der Sattel 3.2 ständig in Kontakt zum Gesäß des Fahrradfahrers gehalten.

Die erfindungsgemäße Variante A10 entspricht der Variante A4. Allerdings besitzt die Hüftauflage 3.4 in der Variante A10 einen zusätzlichen schmalen Sattel 3.2 (in FIG.11,12 (gestrichelt dargestellt). Der Sattel 3.2 ist über den Arm 3.1 (gestrichelt dargestellt) am Lenkerarm 5 befestigt. Alternativ verfügt der Lenkerarm 5 über eine Feder, der den Lenkerarm 5 nach oben drückt. Als "nach oben" bedeutet in der FIG.11, um die Achse 5.4 gegen den Uhrzeigersinn. Durch die Federkraft wird der Sattel 3.2 ständig in Kontakt zum Gesäß des Fahrradfahrers gehalten.
Alternativ ist in Variante 10 der Sattel 3.2 nur ein gepolstertes Rohr, das so genannte Sattelrohr (ohne Abbildung), welches zwischen den Oberschenkeln des Fahrradfahrers verläuft und dem Fahrradfahrer zum Lenken zusätzlichen Seitenhalt gibt. Der Gürtel 5.5 (gestrichelt dargestellt) gilt für Variante C1.

Die erfindungsgemäße Variante A11 entspricht der Variante A10 Allerdings wird in der Variante 11 auf die Hüftauflage 3.4 verzichtet (ohne Abbildung). Der Lenkerarm 5 ist in dieser Variante direkt mit dem vorderen Ende des Sattels 3.2. beziehungsweise dem Sattelrohr, verbunden und der Lenkerarm 5 oder der Sattel 3.2, beziehungsweise das Sattelrohr, ist über einen Gürtel an die Hüfte des Fahrradfahrers gegurtet.

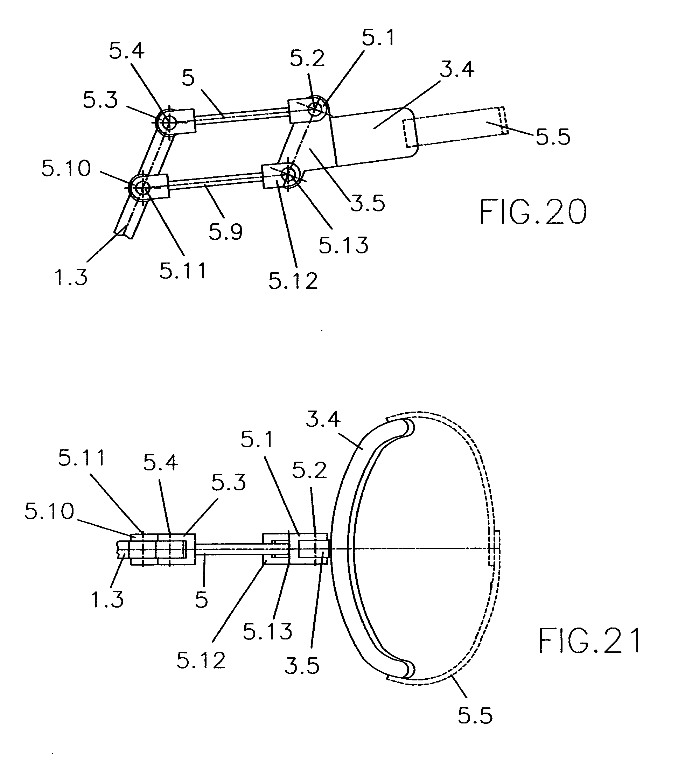

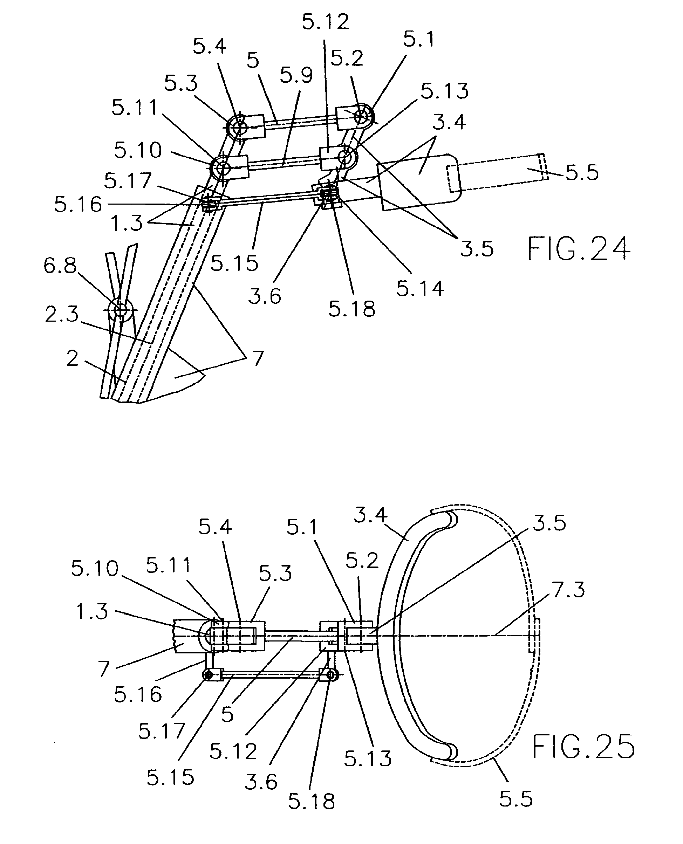

Die erfindungsgemäße Variante A13 entspricht der Variante A2. Wie in Variante A2 ist der Lenkerarm 5 fest mit einem Gabelgelenk 5.3 verbunden. Über dieses Gabelgelenk 5.3, ist der Lenkerarm 5, um die Achse 5.4 des Gabelgelenks 5.3, schwenkbar im Gabelschaftrohr 1.3 gelagert. Allerdings ist in der Variante A13 die Hüftauflage 3.4 fest mit einem Parallelogrammlenker 3.5 verbunden. Der Lenkerarm 5 ist weiterhin fest mit einem Gabelgelenk 5.1 verbunden. Über dieses Gabelgelenk 5.1 ist der Lenkerarm 5, um die Achse 5.2 des Gabelgelenks 5.1, schwenkbar in dem Parallelogrammlenker 3.5 gelagert. Außerdem verfügt die Variante A13 über einen zusätzlichen Lenkerarm 5.9. Dieser Lenkerarm 5.9 ist fest mit dem Gabelgelenk 5.10 verbunden. Über das Gabelgelenk 5.10 ist der Lankerarm 5.9, um die Achse 5.11 des Gabelgelenks 5. 10, schwenkbar im Gabelschaftrohr 1.3 gelagert (FIG.20,21). Außerdem ist der Lenkerarm 5.9 fest mit dem Gabelgelenk 5.12 verbunden. Über das Gabelgelenk 5.12 ist der Lenkerarm 5.9, um die Achse 5.13 des Gabelgelenks 5.12, schwenkbar im Parallelogrammlenker 3.5 gelagert. Somit bilden die Lenkerarme 5 und 5.9 und der Parallelogrammlenker 3.5 eine Parallelogrammverbindung von der Hüftauflage 3.4 zum Gabelschaftrohr 1.3. Durch diese Parallelogrammverbindung zwischen der Hüftauflage 3.4 und dem Gabelschaftrohr 1.3, bleibt die Neigung der Hüftauflage 3.4, bei Bewegungen in vertikaler Richtung, immer gleich. Dies hat den Vorteil, dass die Hüftauflage 3.4 auch bei den Auf- und Abbewegungen der Hüfte, während der Tretbewegung des Fahrradfahrers, stets den gleichen Neigungswinkel beibehält. Auch die Hüfte behält während der Tretbewegung ihren vertikalen Neigungswinkel bei. Durch die Parallelogrammverbindung liegt somit die Hüftauflage 3.4, auch während der Tretbewegung, immer gleichmäßig an der Hüfte des Fahrradfahrers an und kann auch nicht nach oben oder unten wegkippen. Der Gürtel 5.5 (gestrichelt dargestellt) gilt für Variante C1.

Die erfindungsgemäße Variante A14 entspricht der Variante A13. Wie in Variante A13 bilden die Lenkerarme 5 und 5.9 und der Parallelogrammlenker 3.5 eine Parallelogrammverbindung von der Hüftauflage 3.4 zum Gabelschaftrohr 1.3. Zusätzlich ist jedoch in Variante A14 die Hüftauflage 3.4 um die Achse 5.14 schwenkbar gelagert. Somit kann sich die Hüftauflage 3.4 noch besser der Hüftebewegung anpassen. Der Gürtel 5.5 (gestrichelt dargestellt) gilt für Variante C1.

Die erfindungsgemäße Variante A15 entspricht der Variante A14. Jedoch ist in Variante A15 die Hüftauflage 3.4 über eine zusätzliche Parallelogrammverbindung mit dem Fahrradrahmen 7 verbunden. Durch diese Parallelogrammverbindung steht die Hüftauflage 3.4, in Draufsicht auf das Fahrrad, immer senkrecht zur Fahrradmittelachse 7.3, auch bei Lenkbewegungen. Wie in der Variante A14 ist die Hüftauflage 3.4, um die Achse 5.14. schwenkbar zum Parallelogrammlenker 3.5 gelagert. Jedoch ist in der Variante A15 ein Parallelogrammlenker 3.6 fest mit der Hüftauflage 3.4 verbunden. Der Lenkerarm 5.16 ist fest mit dem Fahrradrahmen 7 verbunden. Der Lenkerarm 5.16 ist über den Lenkerarm 5.15 mit dem Parallelogrammlenker 3.6 verbunden. Der Lenkerarm 5.15 ist über ein Kugelgelenk 5.17 mit dem Lenkerarm 5.16 verbunden. Der Lenkerarm 5.15 ist über ein Kugelgelenk 5.18 mit dem Parallelogrammlenker 3.6 verbunden. Die Kugelgelenke 5.17,5.18 gleichen Winkeländerungen zwischen dem Lenkerarm 5.15 und dem Parallelogrammlenker 3.6, sowie dem Lenkerarm 5.16, aus. Somit bilden die Lenkerarme 5.16 und 5.15 und der Parallelogrammlenker 3.6 eine Parallelogrammverbindung von der Hüftauflage 3.4 zum Fahrradrahmen 7. Diese Parallelogrammverbindung bewirkt, dass bei Lenkbewegungen des Lenkers 5, und somit der Hüftauflage 3.4, der Parallelogrammlenker 3.6, und somit der Hüftauflage 3.4, parallel zum Lenkerarm 5.16 bleibt.
Der Gürtel 5.5 (gestrichelt dargestellt) gilt für Variante C1.

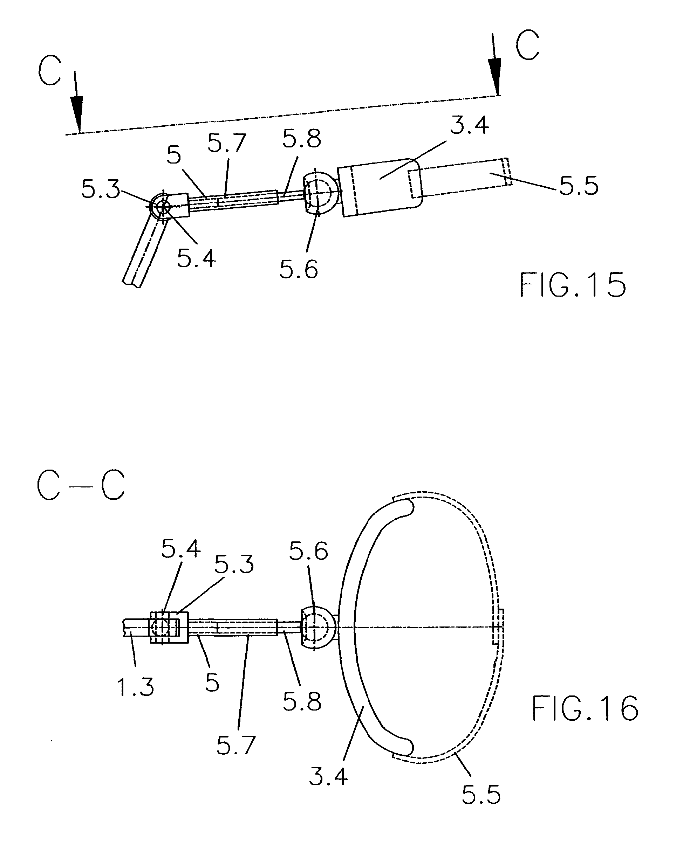

Die erfindungsgemäße Variante B1 entspricht der Variante A1 bis A11. Allerdings ist der Lenkerarm 5 entlang seiner Längsachse teleskopierbar. Dazu besitzt der Lenkerarm 5 eine Teleskopschiene mit einem äußeren Rechteckrohr 5.7 und einem inneren Rechteckrohr 5.8, welche ineinander gesteckt sind. FIG.15,16 zeigen die Variante A3, jedoch mit dem teleskopierbaren Lenkerarm 5 der Variante B1.
FIG.17 zeigt den Schnitt D-D der Variante A5, jedoch mit dem teleskopierbaren Lenkerarm 5 der Variante B1. Diese Teleskopierbarkeit gibt der Hüfte des Fahrradfahrers mehr Bewegungsfreiheit entlang der Längsachse des Lenkerarms 5. Dies ist insbesondere von Vorteil bei Bergauf- oder Bergabfahrten, bei denen der Fahrradfahrer seinen Körper und somit auch seine Hüfte entlang er Fahrradmittelachse 7.3 nach vorne, beziehungsweise nach hinten verlagert. In diesen Fällen kann der teleskopierbare Lenkerarm 5 die damit einhergehende Änderung des Abstandes von der Hüfte zum Gabelschaftrohr 1.3 ausgleichen. Damit die Hüftauflage 3.3 beziehungsweise 3.4 beim Fahren immer Kontakt zur Hüfte hat, verfügt sie über einen Gürtel 5.5 wie in der Variante C1.

Die erfindungsgemäße Variante B2 entspricht den Varianten B1, die eine Hüftauflage 3.4 besitzen, welche mit der Vorderseite der Hüfte des Fahrradfahrers betätigt wird. Allerdings hat in der Variante B2 die Teleskopschiene des Lenkerarms 5 eine Druckfeder. Die Feder versucht immer die Teleskopschiene in ihre ausgefahrene Stellung zu drücken. Dadurch drückt die Feder die Hüftauflage 3.4 gegen die Hüfte des Fahrradfahrers und die Hüftauflage 3.4 hat beim Fahren immer Kontakt zur Hüfte. Da die Feder die Hüftauflage 3.4, während des Fahrradfahrens, ständig gegen die Hüfte des Fahrradfahrers drück, kann somit alternativ auch auf den Gürtel 5.5 verzichtet werden.

Die erfindungsgemäße Variante B3 entspricht den Varianten B1, bei denen der Lenkerarm 5 um die Hüfte herum verläuft und die Hüftauflage 3.3 die Hüfte von hinten umklammert und bei denen der Fahrradfahrer die Hüftauflage 3.3 mit dem hinteren Teil seiner Hüfte oder seinem Gesäß betätigt. Allerdings hat in der Variante B3 die Teleskopschiene des Lenkerarms 5 eine Zugfeder. Die Feder versucht immer die Teleskopschiene in ihre eingefahrene Stellung zu ziehen. Dadurch zieht die Feder die Hüftauflage 3.3 gegen die Hüfte beziehungsweise das Gesäß des Fahrradfahrers und die Hüftauflage 3.3 hat beim Fahren immer Kontakt zur Hüfte beziehungsweise zum Gesäß des Fahrradfahrers. Da die Feder die Hüftauflage 3.3, während des Fahrradfahrens, ständig gegen die Hüfte des Fahrradfahrers zieht, kann somit alternativ auch auf den Gürtel 5.5 verzichtet werden.

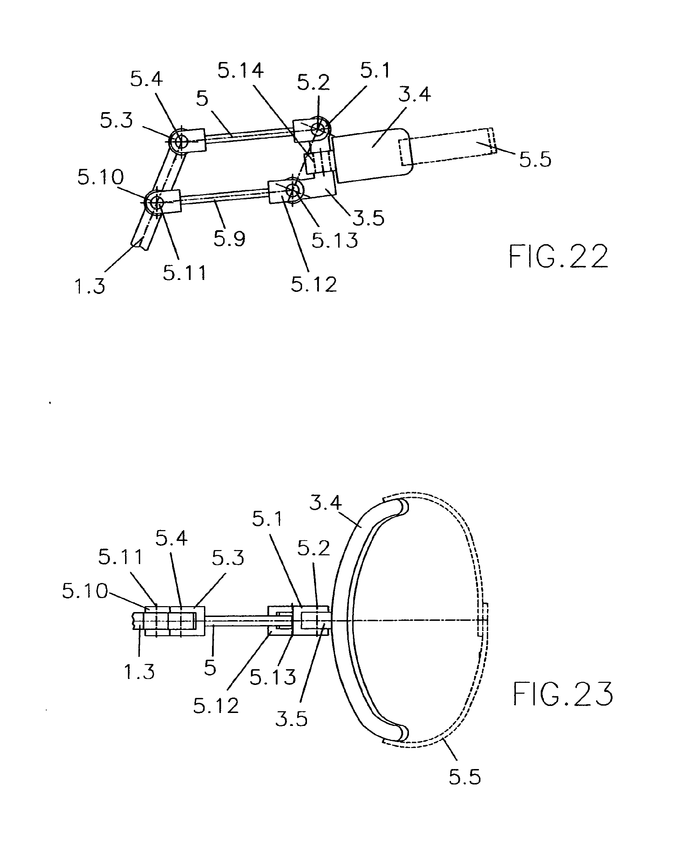

Die erfindungsgemäße Variante C1 entspricht den Varianten A1 bis A8 oder A10 oder B1 bis B3. Allerdings besitzt die Varianten C1 einen Gürtel 5.5, mit dem die Hüfte des Fahrradfahrers an die Hüftauflage 3.3 beziehungsweise 3.4 gegurtet wird. Der Gürtel 5.5 ist in FIG.6,7,8,9, 10,11,12,13,14,15,16,17,18,19,20,21,22,23 gestrichelt dargestellt. Somit ist ein enger Kontakt der Hüfte zur Hüftauflage 3.3 beziehungsweise 3.4 und somit eine gute Übertragung der Lenkbewegungen der Hüfte gewährleistet.

Die erfindungsgemäße Variante C2 entspricht den vorherigen Varianten deren Lenkerarm 5 wenigstens ein Gabelgelenk 5.1, 5.3 oder wenigstens ein Kugelgelenk 5.6 besitzt. Allerdings haben die genannten Gelenke 5.1,5.3,5.6 Anschläge, die den Gelenkhub in vertikaler Richtung auf das zum Lenken und Fahren des Fahrrades notwendige Maß begrenzen. Dadurch wird verhindert, dass der Lenkerarm 5 oder die Hüftauflage 3.3, beziehungsweise 3.4, vertikal herunterklappen, sobald der die Hüftauflage 3.3, beziehungsweise 3.4, nicht mehr von der Hüfte des Fahrradfahrers oder dem Gürtel 5.5 gehalten wird. Somit befindet sich die Hüftauflage 3.3, beziehungsweise 3.4, beim Besteigen des Fahrrades immer in einer geeigneten Einstiegshöhe.

Die Beschreibung ist auch Bestandteil des erfinderischen Gedankens.

### Nummerierung entsprechend den Zeichnungen:

- 1: Gabel
- 1.1.: Gabelrohr
- 1.2: Gabelbrücke
- 1.3: Gabelschaftrohr
- 1.5: Lenkerarm
- 1.6: Umlenkrolle
- 1.7: Vorbau
- 1.8: Lenker
- 1.9: Lenkerarm
- 2: Lenkkopflager
- 2.3: Lenkkopflagerachse
- 3.1: Arm
- 3.2: Sattel
- 3.3: Hüftauflage
- 3.4: Hüftauflage
- 3.5: Parallelogrammlenker
- 3.6: Parallelogrammlenker
- 4: Antriebskette
- 5: Lenkerarm
- 5.1: Gabelgelenk
- 5.2: Achse
- 5.3: Gabelgelenk
- 5.4: Achse
- 5.5: Gürtel
- 5.6: Kugelgelenk
- 5.7: äußeres Rechteckrohr
- 5.8: inneres Rechteckrohr
- 5.9: Lenkerarm
- 5.10: Gabelgelenk
- 5.11: Achse
- 5.12: Gabelgelenk
- 5.13: Achse
- 5.14: Achse
- 5.13: Lenkerarm
- 5.16: Lenkerarm
- 5.17: Kugelgelenk
- 5.18: Kugelgelenk
- 6.2: Armhebel
- 6.3: Armhebel
- 6.4: Handgriff
- 6.8: Achse
- 7: Fahrradrahmen
- 7.1: Rahmenstück
- 7.3: Fahrradmittelachse
- 8: Tretkurbel
- 8.1: Achse
- 9.2: Trittbrett
- 8.3: Trittbrett
- 8.4: Achse
- 8.5: Achse
- 8.6: Achse
- 8.7: Achse
- 9: Antriebskettenrad
- 10: Antriebsritzel
- 17: Hinterrad
- 22: Vorderrad
- 23: Schalt- und Bremshebel

## Patentansprüche

1. Fahrrad mit Arm- und Beinantrieb, insbesondere Fahrrad mit einem Vorderrad (22) und einem Hinterrad (17), insbesondere Fahrrad mit schwenkenden Armhebeln (6.2,6.3) für den Armantrieb, **dadurch gekennzeichnet, dass** wenigstens ein Lenkerarm (5) Teil der Fahrradlenkung ist und um eine Lenkkopflagerachse (2.3) schwenkbar zum Fahrradrahmen (7) gelagert ist.

2. Fahrrad nach Anspruch 1, **dadurch gekennzeichnet, dass** der Lenkerarm (5) eine Teleskopiereinrichtung besitzt.

3. Fahrrad nach Anspruch 1, **dadurch gekennzeichnet, dass** wenigstens ein Lenkerarm (5) fest mit dem Gabelschaftrohr (1.3) verbunden ist oder über ein Gabelgelenk (5.3) schwenkbar mit dem Gabelschaftrohr (1.3) verbunden ist.

4. Fahrrad nach Anspruch 1, **dadurch gekennzeichnet, dass** die Fahrradlenkung wenigstens eine Auflage (3.3,3.4) besitzt.

5. Fahrrad nach Anspruch 1 oder 4, **dadurch gekennzeichnet, dass** die Fahrradlenkung wenigstens einen Sattel (3.2) oder wenigstens ein Sattelrohr besitzt.

6. Verfahren zum Fahren eines Fahrrades mit Arm- und Beinantrieb, insbesondere eines Fahrrades mit einem Vorderrad (22) und einem Hinterrad (17), insbesondere eines Fahrrades mit schwenkenden Armhebeln (6.2.6.3) für den Armantrieb, **dadurch gekennzeichnet, dass** der Fahrradfahrer (40) über wenigstens eine Hüftbewegung wenigstens einen Lenkerarm (5) um eine Lenkkopflagerachse (2.3) schwenkt und somit das Fahrrad lenkt.

7. Verfahren nach Anspruch 6, **dadurch gekennzeichnet, dass** die Hüftbewegung wenigstens eine Hüftauflage (3.3,3.4) bewegt.

8. Verfahren nach Anspruch 6 oder 7, **dadurch gekennzeichnet, dass** die Hüftbewegung wenigstens einen Sattel (3.2) oder wenigstens ein Sattelrohr bewegt.

9. Verfahren nach Anspruch 7 oder 8, **dadurch gekennzeichnet, dass** wenigstens eine Hüftauflage (3.3,3.4) und oder wenigstens ein Sattel (3.2) oder wenigstens ein Sattelrohr schwenkbar zum Lenkerarm (5) gelagert ist.

10. Verfahren nach Anspruch 6 oder 9, **dadurch gekennzeichnet, dass** wenigstens ein Lenkerarm (5) schwenkbar zum dem Gabelschaftrohr (1.3) gelagert ist.
